# FASCICULE DE BREVET EUROPEEN

(11) **EP 3 365 698 B1**
(45) Date de publication et mention de la délivrance du brevet: **25.08.2021**
(21) Numéro de dépôt: 16782229.5
(22) Date de dépôt: 17.10.2016
(51) Int. Cl.: G01S 11/06, G01S 13/74, G01S 13/931

(54) **PROCÉDÉ D'ÉVALUATION DE LA DISTANCE SÉPARANT UN IDENTIFIANT ET UN VÉHICULE, UNITÉ ÉLECTRONIQUE ET IDENTIFIANT ASSOCIÉS**
VERFAHREN ZUR AUSWERTUNG DES ABSTANDS ZWISCHEN EINEM IDENTIFIKATOR UND EINEM FAHRZEUG, ELEKTRONISCHE EINHEIT UND IDENTIFIKATOR
METHOD FOR EVALUATING THE DISTANCE SEPARATING AN IDENTIFIER AND A VEHICLE, ELECTRONIC UNIT AND IDENTIFIER

(30) Priorité: 19.10.2015 FR 1559958
(43) Date de publication de la demande: 29.08.2018
(73) Titulaire: Valeo Comfort and Driving Assistance, 94046 Créteil Cedex (FR)
(72) Inventeur: PATURE, Joel, 94046 Créteil Cedex (FR); LECONTE, Eric, 94046 Créteil Cedex (FR); PETEL, Laurent, 94046 Créteil Cedex (FR)
(74) Mandataire: Delplanque, Arnaud
(86) Numéro de dépôt international: PCT/EP2016/074906
(87) Numéro de publication internationale: WO 2017/067891

(56) Documents cités:
- EP-A2- 2 800 068
- US-A1- 2004 100 392
- US-A1- 2009 264 082
- US-A1- 2010 305 779
- US-A1- 2014 129 051

## Description

### DOMAINE TECHNIQUE AUQUEL SE RAPPORTE L'INVENTION

La présente invention concerne les techniques d'évaluation d'une distance entre un véhicule et un identifiant, généralement porté par un utilisateur du véhicule.

Elle concerne plus particulièrement un procédé d'évaluation de la distance séparant un identifiant et un véhicule, ainsi qu'une unité électronique et un identifiant associés.

L'invention s'applique particulièrement avantageusement dans le cas où un module d'émission basse-fréquence génère un signal dont la puissance est mesurée afin d'évaluer la distance susmentionnée.

### ARRIERE-PLAN TECHNOLOGIQUE

Il est connu d'utiliser un identifiant, typiquement porté par un utilisateur d'un véhicule, pour détecter l'approche de l'utilisateur et commander alors automatiquement au moins une fonctionnalité du véhicule (telle que le déverrouillage des portes du véhicule).

On prévoit par exemple dans ce but qu'un module d'émission basse-fréquence du véhicule génère un signal électromagnétique (de fréquence typiquement inférieure à 150 kHz) ayant une portée donnée.

Lorsque l'identifiant entre dans la portée du signal émis par le véhicule, il émet une trame de réponse pour signaler sa présence et une communication s'établit alors entre l'identifiant et le véhicule, ce qui permet normalement (en particulier si l'identifiant correspond bien au véhicule concerné) d'aboutir à la mise en œuvre de la fonctionnalité susmentionnée.

L'identifiant effectue par ailleurs une mesure de la puissance du signal généré par le module d'émission basse-fréquence, ce qui lui permet d'évaluer précisément la distance séparant l'identifiant et le véhicule (selon une technique couramment dénommée RSSI, pour *"Received Signal Strength Indication"*)*.*

Cette distance est généralement transmise au véhicule via la communication établie comme indiqué ci-dessus, ce qui permet au véhicule de connaître la distance de l'utilisateur et de ne mettre en œuvre certaines fonctionnalités que lorsque l'utilisateur est suffisamment proche du véhicule.

De manière générale, on cherche à augmenter la portée d'un tel système afin de détecter au plus tôt l'arrivée d'un utilisateur et d'évaluer dès que possible la distance séparant le véhicule et l'identifiant.

Dans le système décrit ci-dessus, une telle augmentation de portée nécessite toutefois une augmentation du dimensionnement (et donc du poids et du coût) du module d'émission basse-fréquence, qui contrebalance rapidement l'intérêt que présente cette solution sur le plan de la précision.

Le document US2010/305779 A1 divulgue un procédé d'évaluation de la distance entre un véhicule et un porte-clés mobile.

### OBJET DE L'INVENTION

Dans ce contexte, la présente invention propose un procédé d'évaluation de la distance séparant un identifiant équipé d'un premier module de communication sans fil et un véhicule équipé d'un second module de communication sans fil, selon la revendication 1.

La distance entre l'identifiant et le véhicule est ainsi d'abord estimée dans le cadre de la liaison sans fil établie, sans faire appel à l'émission d'un signal dédié au niveau du véhicule.

L'évaluation de la distance sur la base d'une mesure de puissance du signal dédié, relativement précise, peut ainsi n'intervenir que dans une seconde phase, lorsque l'identifiant est proche du véhicule.

On peut ainsi détecter l'arrivée de l'utilisateur et estimer sa distance par rapport au véhicule relativement tôt (dès que l'identifiant entre dans la portée de la liaison sans fil), sans nécessiter une augmentation du dimensionnement du module d'émission du signal dédié. On retrouve toutefois le bénéfice de précision de la mesure de puissance du signal dédié dès que l'utilisateur est suffisamment proche du véhicule (l'identifiant entrant dans la portée du signal dédié), ce qui est particulièrement avantageux puisqu'une évaluation précise est souhaitée avant tout à proximité du véhicule.

Selon des caractéristiques optionnelles, et donc non limitatives :
- le procédé comprend une étape de transmission de la distance évaluée, de l'identifiant au véhicule, via la liaison sans fil établie ;
- le procédé comprend une étape, préalable à l'étape d'établissement de la liaison sans fil, d'émission d'au moins une trame d'annonce par le second module de communication sans fil ;
- la liaison sans fil établie a une portée supérieure à 10 m ;
- ledit signal émis a une portée inférieure à 10 m ;
- ledit signal émis a une fréquence inférieure à 150 kHz ;
- les signaux électromagnétiques impliqués dans la liaison sans fil établie ont une fréquence supérieure à 1 Mhz ;
- la liaison sans fil établie est de type Bluetooth Low Energy.

L'invention propose également une unité électronique pour véhicule selon la revendication 8.

L'invention propose enfin un identifiant selon la revendication 9.

Les caractéristiques optionnelles présentées ci-dessus en termes de procédé peuvent éventuellement s'appliquer à une telle unité électronique ou à un tel identifiant.

Lorsque les dispositifs précités (unité électronique, identifiant) comprennent un processeur et une mémoire mémorisant notamment des instructions exécutables par le processeur, chacun des modules susmentionnés peut être mis en œuvre en pratique du fait de l'exécution par le processeur d'un ensemble spécifique d'instructions mémorisées dans la mémoire (en coopération éventuellement avec un circuit extérieur au processeur tel qu'un module de communication).

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un système dans lequel peut être mise en œuvre l'invention ;
- la figure 2 est un logigramme représentant un exemple de procédé mis en œuvre dans le système de la figure 1 ; et
- la figure 3 est un logigramme illustrant des mécanismes de temporisation éventuellement mis en œuvre à l'issue du procédé de la figure 2.

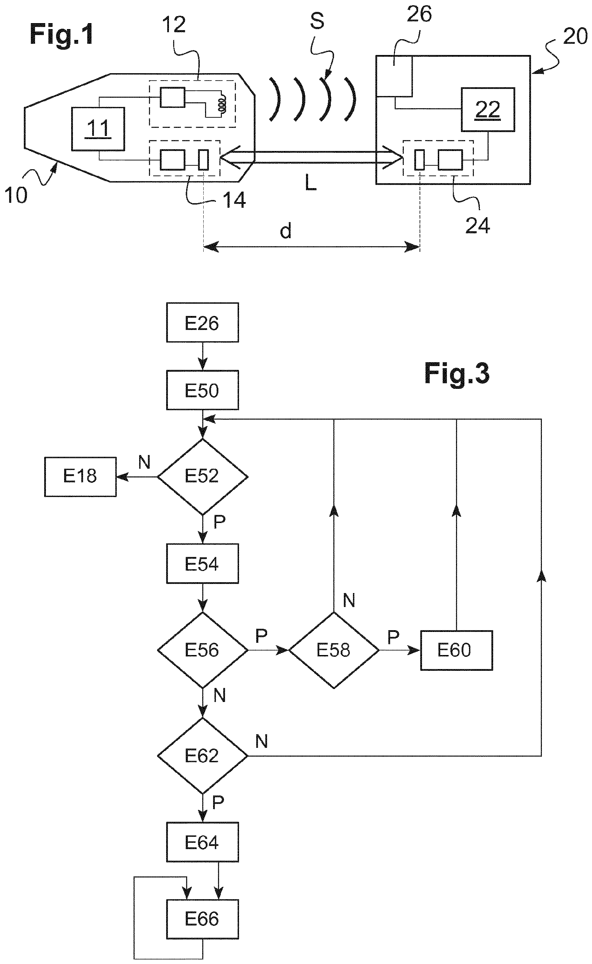

La figure 1 représente schématiquement les éléments principaux d'un système dans lequel peut être mise en œuvre l'invention.

Un tel système comprend un véhicule 10 et un identifiant 20.

Le véhicule 10 est équipé d'une unité électronique de commande 11, d'un module d'émission basse-fréquence 12 et d'un module de communication 14.

L'unité électronique de commande 11 comprend par exemple un microprocesseur et une mémoire. La mémoire mémorise notamment des instructions de programme qui permettent, lorsqu'elles sont exécutées par le microprocesseur, la mise en œuvre par l'unité électronique de commande 11 des procédés décrits ci-dessous. La mémoire mémorise également des valeurs ou paramètres utilisés (comme expliqué plus loin) au cours de ces procédés, par exemple une distance d estimée entre le véhicule 10 et l'identifiant 20, une distance prédéterminée d₀ et une distance prédéfinie d₁.

En variante, l'unité électronique de commande 11 pourrait être réalisée sous la forme d'un circuit intégré à application spécifique (ou ASIC pour *"Application Specific Integrated Circuit"*)*.*

Le module d'émission basse-fréquence 12 comprend une antenne (réalisée par exemple sous la forme d'une ferrite bobinée) conçue pour émettre un signal électromagnétique basse-fréquence S (typiquement de fréquence inférieure à 150 kHz) sous la commande de l'unité électronique de commande 11.

Le module de communication 14 est conçu pour établir une liaison sans fil avec d'autres appareils électroniques, ici une liaison de type *"Bluetooth Low Energy"* (ou *"BLE"*)*.* Le module de communication 14 comprend donc également une antenne (réalisée par exemple sous la forme d'une piste conductrice) conçue pour émettre et recevoir des signaux électromagnétiques haute-fréquence (typiquement de fréquence supérieure à 1 Mhz, voire à 500 MHz), ici dans la bande à 2,4 GHz.

L'identifiant 20 est généralement porté par un utilisateur du véhicule 10 et permet la commande de certaines fonctionnalités du véhicule 10 (par exemple le déverrouillage des portes du véhicule 10), notamment lorsqu'il est approché du véhicule 10, comme expliqué ci-après. L'identifiant 20 peut éventuellement comporter en outre des boutons de commande, à l'aide desquels l'utilisateur peut commander certaines au moins des fonctionnalités précitées ou d'autres fonctionnalités du véhicule 10.

L'identifiant 20 comprend une unité de commande 22, un circuit de communication 24 et un circuit de mesure 26.

L'unité de commande 22 est par exemple réalisée au moyen d'un microprocesseur et d'une mémoire. La mémoire mémorise notamment des instructions de programme qui permettent, lorsqu'elles sont exécutées par le microprocesseur, la mise en œuvre par l'unité de commande 22 des procédés décrits ci-dessous. La mémoire mémorise également des valeurs ou paramètres utilisés au cours de ces procédés, par exemple l'information indicative de la puissance mesurée par le circuit de mesure 26 et la distance séparant le véhicule 10 et l'identifiant 20 telle qu'estimée sur la base de cette information.

En variante, l'unité de commande 22 pourrait être réalisée sous la forme d'un circuit intégré à application spécifique.

Le circuit de communication 24 est conçu pour établir une liaison sans fil (ici de type *"Bluetooth Low Energy"* ou "*BLE*") avec d'autres appareils électroniques, en particulier avec l'unité électronique de commande 11 du véhicule 10 via le module de communication 14 mentionné plus haut.

Grâce à la liaison sans fil L établie entre le module de communication 14 du véhicule 10 et le circuit de communication 24 de l'identifiant 20, des données peuvent être échangées entre l'unité électronique de commande 11 du véhicule et l'unité de commande 22 de l'identifiant 20, comme expliqué plus loin.

Le circuit de mesure 26 est quant à lui conçu pour mesurer la puissance, au niveau de l'identifiant 20, du signal électromagnétique S émis par l'antenne du module d'émission basse-fréquence 12 du véhicule 10 (conformément à une technique dite RSSI pour "*Received Signal Strength Indication"*) et pour communiquer une information indicative de la puissance mesurée au circuit de commande 22.

Comme expliqué ci-après, le circuit de commande 22 peut en déduire une estimation de la distance entre le véhicule 10 et l'identifiant 20.

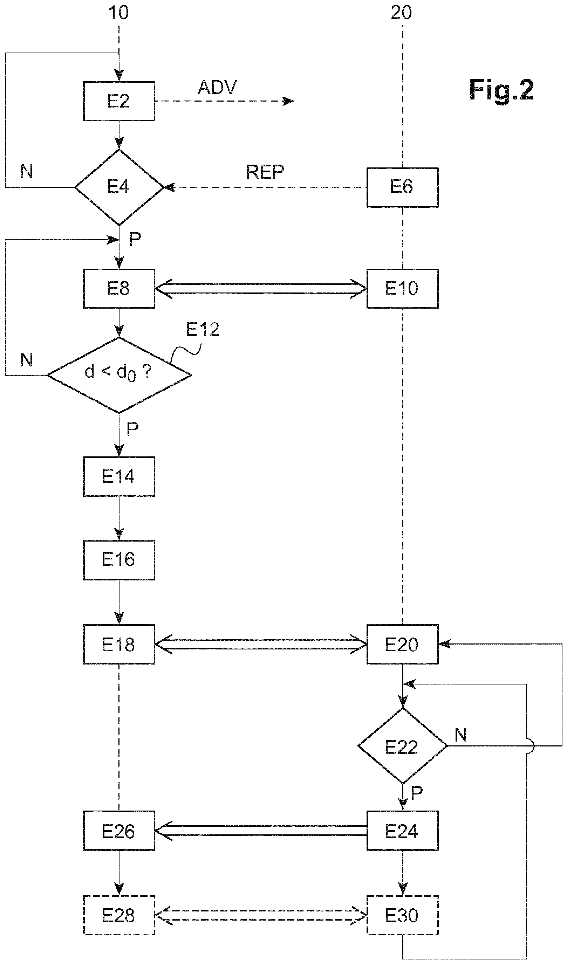

La figure 2 représente un exemple de procédé mis en œuvre dans le système qui vient d'être décrit.

Au début de ce procédé, le module de communication 14 est placé dans un mode d'annonce ("*advertising mode"* selon la terminologie anglo-saxonne) dans lequel il émet des trames d'annonce ADV (ou *"advertising packets"* selon l'appellation anglo-saxonne), comme représenté par l'étape E2 en figure 2. Le module de communication 14 est par exemple placé dans un tel mode sous la commande de l'unité électronique de commande 11.

Dans un tel mode, le module de communication 14 émet périodiquement une trame d'annonce ADV (par exemple avec une période comprise entre 0,5 s et 5 s, ici avec une période comprise entre 1 s et 2 s), dans l'attente d'une réponse d'un autre appareil électronique.

Ainsi, comme représenté par l'étape E4, le module de communication 14 détermine s'il reçoit une réponse et boucle dans la négative (flèche N) à l'étape E2.

De son côté, le circuit de communication 24 de l'identifiant 20 est placé dans un mode de balayage (*"scanning mode"* selon l'appellation anglo-saxonne), par exemple sous la commande de l'unité de commande 22. Dans ce mode, le circuit de communication 24 détecte l'arrivée de potentielles trames d'annonce émises par d'autres appareils électroniques.

Ainsi, lorsque l'identifiant 20 (de même que son circuit de communication 24) arrive dans la portée du module de communication 14 du véhicule 10 (en pratique à une distance d'environ 35 m du véhicule 10), le circuit de communication 24 reçoit (dans un laps de temps égal au maximum à la période d'émission des trames d'annonce ADV) une trame d'annonce ADV émise par le module de communication 14 et émet en réponse une trame de réponse REP à l'étape E6.

Une telle trame de réponse REP est par exemple une requête de connexion (trame de type CONNECT_REQ) qui permet l'établissement d'une connexion entre le module de communication 14 et le circuit de communication 24.

Lorsque le module de communication 14 reçoit la trame de réponse REP, il poursuit son traitement à l'étape E8 (flèche P suite à la détermination de l'étape E4).

En variante, il est également envisageable, en vue de l'établissement de la connexion, que le circuit de communication 24 de l'identifiant 20 soit placé dans un mode d'annonce ("*advertising mode"*)*,* dans lequel il émet des trames d'annonce ADV ("*advertising packets"*)*,* et que le module de communication 14 du véhicule 10 soit placé dans un mode de balayage (*"scanning mode"*)*.* Une telle solution permet de réduire la consommation électrique au niveau de l'identifiant 20.

Quoiqu'il en soit, après des échanges tels que décrits ci-dessus, une connexion (liaison sans fil L) est établie entre le module de communication 14 et le circuit de communication 24, et l'unité électronique de commande 11 du véhicule 10 et l'unité de commande 22 de l'identifiant 20 peuvent donc effectuer divers traitements (voire respectivement l'étape E8 pour l'unité électronique de commande 11 et l'étape E10 pour l'unité de commande 22) en échangeant des données entre elles.

Ces traitements comprennent par exemple une authentification de l'identifiant 20 par l'unité électronique de commande 11. Dans ce cas, le procédé ne se poursuit comme décrit ci-après qu'en cas de réussite de cette authentification.

Les traitements des étapes E8 et E10 comprennent également une étape d'estimation de la distance d séparant le véhicule 10 et l'identifiant 20 sur la base du temps de propagation de signaux électromagnétiques utilisés dans le cadre de la connexion établie L, typiquement par mesure du temps d'arrivée (ou TOA pour *"Time Of Arrival"*) des signaux reçus ou par mesure de phase des signaux reçus. Une telle estimation est par exemple réalisée selon la technique décrite dans l'article *"*High-Precision 2,5 GHz DSSS RF Ranging", de B.D. Farnsworth et D.W.A. Taylor, ENSCO Inc.

En pratique, l'estimation de la distance d peut être réalisée par l'unité électronique de commande 11, par exemple notamment sur la base d'informations liées audit temps de propagation reçues du module de communication 14. En variante, l'estimation de la distance d peut être réalisée au sein de l'identifiant 20 (par exemple par l'unité de commande 22) puis transmise à l'unité électronique de commande 11 via la connexion établie L.

L'unité électronique de commande 11 détermine à l'étape E12 si la distance d ainsi estimée est inférieure à une distance prédéterminée d₀ (avec par exemple d₀ = 15 m).

Dans la négative (flèche N), le procédé boucle à l'étape E8. On peut prévoir ainsi que la distance d soit estimée périodiquement avec une première période donnée (par exemple comprise entre 2 s et 5 s), ici toutes les 3 secondes (soit environ tous les 4 mètres pour un utilisateur marchant à 5 km/h), tant que la distance d est supérieure à la distance prédéterminée d₀.

Dans l'affirmative à l'étape E12 (flèche P), l'unité électronique de commande 11 commande l'activation de fonctions d'accueil du véhicule 10 (étape E14), notamment par exemple le déploiement de rétroviseurs externes du véhicule, la mise sous tension de certains feux du véhicule ou d'un éclairage interne (tel que celui du plafonnier) ou externe (tel qu'un éclairage d'une poignée de porte ou d'un seuil de porte) du véhicule 10.

En variante, l'activation de fonctions d'accueil pourrait être commandée lorsque la distance estimée (comme décrit ci-dessous à l'étape E18) est inférieure à un seuil donné (par exemple égal à 10 m) plus faible que la distance prédéterminée d₀.

L'unité électronique de commande 11 commande par ailleurs à l'étape E16 l'activation de l'émission par le module d'émission basse-fréquence 12 du signal électromagnétique basse-fréquence S.

Le module d'émission basse-fréquence 12 est conçu pour avoir une portée (ici de l'ordre de 5 m) inférieure à la distance prédéterminée d₀ de sorte que le circuit de mesure 26 ne donne aucune indication lorsque l'utilisateur est à une distance de l'ordre de la distance prédéterminée d₀, même si le module d'émission basse-fréquence est activé.

On remarque que l'utilisation d'un module d'émission basse-fréquence 12 ayant une portée relativement faible permet de choisir une conception relativement simple, d'encombrement et de masse limités, pour le module d'émission basse fréquence 12.

L'unité électronique de commande 11 et l'unité de commande 22 poursuivent alors leurs échanges (respectivement à l'étape référencée E18 et E20) via la liaison sans fil établie entre le module de communication 14 et le circuit de communication 24.

Au cours de ces échanges, l'unité électronique de commande 11 et/ou l'unité de commande 22 mettent en œuvre une étape d'estimation de la distance d séparant le véhicule 10 et l'identifiant 20 sur la base du temps de propagation de signaux électromagnétiques utilisés dans le cadre de la connexion établie, comme déjà mentionné ci-dessus à propos des étapes E8 et E10.

On peut prévoir que la distance d soit estimée périodiquement avec une seconde période donnée (plus courte que la première période susmentionnée, et par exemple comprise entre 0,5 s et 2 s), ici toutes les 1,5 secondes (soit environ tous les 2 mètres pour un utilisateur marchant à 5 km/h), tant que la distance d est inférieure à la distance prédéterminée d₀ (et qu'aucune estimation de distance, calculée sur la base des mesures effectuées par le circuit de mesure 26, n'est reçue de l'identifiant 20).

Comme déjà indiqué, la distance d ainsi estimée peut éventuellement être utilisée pour commander le déclenchement de fonctions d'accueil lorsque cette distance d devient inférieure à un seuil prédéterminé.

L'unité de commande 22 de l'identifiant 20 détermine également périodiquement (à l'étape E22) si le circuit de mesure 26 lui transmet une information indicative de la puissance du signal basse-fréquence S mesurée (ce qui se produit lorsque l'identifiant 20 entre dans la portée du module d'émission basse-fréquence 12).

Dans la négative (flèche N), le procédé boucle à l'étape E20, notamment en vue de poursuivre la détermination périodique de la distance d séparant le véhicule 10 et l'identifiant 20 sur la base du temps de propagation de signaux électromagnétiques utilisés dans le cadre de la connexion établie L.

Au contraire, si le circuit de mesure 26 détecte le signal basse-fréquence S généré par le module d'émission basse-fréquence 12 et transmet une information indicative de la puissance de ce signal S à l'unité de commande 22 (flèche P à l'étape E22), l'unité de commande 22 estime, sur la base de cette information, la distance d séparant le véhicule 10 et l'identifiant 20, et transmet à l'étape E24 la distance estimée d à l'unité électronique de commande 11 du véhicule 10 via la liaison sans fil établie L entre le module de communication 14 et le circuit de communication 24.

L'unité électronique de commande 11 reçoit la distance estimée d à l'étape E26 et peut ainsi utiliser cette distance estimée d au cours de son fonctionnement, notamment pour localiser précisément l'utilisateur (l'estimation de la distance d sur la base du signal mesuré par le circuit de mesure 26 étant de l'ordre de 0,1 m et étant généralement plus précise que l'estimation réalisée sur la base du temps de propagation de signaux électromagnétiques utilisés dans le cadre de la connexion établie L).

L'unité électronique de commande 11 peut notamment comparer la distance estimée d à un ou plusieurs seuils de distance, par exemple pour activer éventuellement les fonctions d'accueil (dans la variante où elles n'ont pas été activées à l'étape E14 décrite plus haut) ou pour déverrouiller les portes du véhicule 10 (généralement à une distance inférieure à la distance d'activation des fonctions d'accueil).

L'unité électronique de commande 11 du véhicule 10 et l'unité de commande 22 de l'identifiant peuvent éventuellement poursuivre leurs échanges, comme représenté schématiquement aux étapes E28 et E30. Il n'est toutefois pas nécessaire à cette étape (bien que cela soit tout de même envisageable) de procéder à l'estimation de la distance d sur la base du temps de propagation des signaux électromagnétiques.

Le fonctionnement de l'unité de commande 22 boucle alors à l'étape E22 afin de déterminer si le circuit de mesure 26 lui transmet (toujours) une information indicative de la puissance du signal basse-fréquence S mesurée.

La figure 3 est un logigramme illustrant des mécanismes de temporisation qui peuvent éventuellement être mis en œuvre à l'issue du procédé de la figure 2.

Le procédé de la figure 3 débute lorsque l'unité électronique de commande 11 reçoit pour la première fois, en provenance de l'unité de commande 22 de l'identifiant 20, la distance d estimée en fonction de la mesure de puissance effectuée par le circuit de mesure 26 (première mise en œuvre de l'étape E26 décrite plus haut).

L'unité électronique de commande 11 déclenche alors un compteur t (ou "*timer*" selon l'appellation d'origine anglo-saxonne couramment utilisée) à l'étape E50.

L'unité électronique de commande 11 détermine ensuite à l'étape E52 si une nouvelle valeur de distance estimée d est reçue de l'unité de commande 22 de l'identifiant 20, par exemple dans un laps de temps donné (typiquement compris entre 100 ms et 500 ms).

Si aucune nouvelle valeur de distance estimée d n'est reçue dans le laps de temps donné (flèche N en figure 3), le procédé se poursuit à l'étape E18 déjà décrite (on considère en effet dans ce cas que l'identifiant 20 est sorti de la portée du module d'émission basse-fréquence 12 et l'unité électronique de commande 11 se retrouve donc effectivement dans la situation de l'étape E18).

Si une nouvelle valeur de distance estimée d est reçue (flèche P à l'étape E52), cette nouvelle valeur est utilisée par l'unité électronique de commande 11 à l'étape E54, par exemple pour déterminer si l'utilisateur est en train de s'approcher du véhicule ou s'il est en train de le contourner.

L'unité électronique de commande 11 détermine alors à l'étape E56 si le compteur t atteint une première valeur prédéterminée T1 (par exemple inférieure à 1 minute).

Dans la négative (c'est-à-dire si le compteur t n'a pas encore atteint la première valeur prédéterminée T1 ou si le compteur t a atteint la valeur prédéterminée T1 au cours d'une précédente itération et a donc dépassé cette première valeur prédéterminée), le procédé se poursuit à l'étape E62 décrite plus bas.

Lorsque le compteur t atteint la valeur T1 (flèche P à l'étape E56), l'unité électronique de commande détermine à l'étape E58 si la distance estimée d (reçue de l'identifiant 20 lors du précédent passage à l'étape E52) est supérieure à une distance prédéfinie d₁ (la distance prédéfinie d₁ étant par exemple comprise entre 0,5 m et 2 m, ici d₁ = 1 m).

Dans la négative (flèche N à l'étape E58), le procédé boucle à l'étape E52.

En revanche, si la distance estimée d est supérieure à la distance prédéfinie d₁ (et en outre, comme vu ci-dessus, si la distance d est régulièrement estimée sur la base de la mesure de puissance effectuée par le circuit de mesure 26 depuis une durée égale à la première valeur prédéterminée T1), l'unité électronique de commande 11 commande une diminution de la puissance du signal S généré par le module d'émission basse-fréquence 12 à l'étape E60 (ce qui se traduit par une diminution de portée du module d'émission basse-fréquence 12).

On réduit ainsi la consommation électrique du module d'émission basse-fréquence 12 lorsque l'utilisateur reste pendant un laps de temps non négligeable (durée égale à la première valeur prédéterminée T1) à une distance inférieure à la portée maximale du module d'émission basse-fréquence 12 et supérieure à la distance prédéfinie d₁.

On remarque que l'on peut alors éventuellement augmenter la fréquence des étapes de détermination, en fonction de la puissance mesurée du signal S généré par le module d'émission basse-fréquence 12, de la distance entre le véhicule 10 et l'identifiant 20, ce qui permet de diminuer le temps de réaction du système (sans toutefois augmenter la consommation électrique grâce à la diminution de puissance susmentionnée).

Le procédé se poursuit alors à l'étape E52 décrite ci-dessus. On remarque que la mise en œuvre de l'étape E52 peut alors éventuellement conduire à l'étape E18 comme déjà indiqué, en particulier si la réduction de puissance du signal S généré par le module d'émission basse-fréquence 12 a pour conséquence que l'identifiant 20 n'est plus dans la (nouvelle) portée du module d'émission basse-fréquence 12.

On décrit à présent l'étape E62 à laquelle le procédé aboutit comme déjà indiqué lorsque le compteur t ne correspond pas à la première valeur prédéterminée T1.

L'unité électronique de commande 11 détermine à l'étape E62 si le compteur t atteint une seconde valeur prédéterminée T2 (par exemple comprise entre 2 minutes et 10 minutes).

Dans la négative (flèche N en figure 3), le procédé boucle à l'étape E52.

Dans l'affirmative (flèche P en figure 3), ceci signifie que l'utilisateur est resté dans la portée (éventuellement réduite comme indiqué ci-dessus) du module d'émission basse-fréquence 12 pendant une durée égale à cette seconde valeur prédéterminée T2, sans avoir effectué une action telle que l'ouverture d'une porte du véhicule ou le démarrage du véhicule.

L'unité électronique de commande 11 procède dans ce cas à l'arrêt du fonctionnement du module d'émission basse-fréquence 12 (étape E64), ce qui évite toute consommation électrique par le module d'émission basse-fréquence 12.

L'unité électronique de commande 11 peut alors déterminer (à l'étape E66, et éventuellement périodiquement) la distance d entre le véhicule 10 et l'identifiant 20 par estimation sur la base du temps de propagation de signaux électromagnétiques impliqués dans la liaison sans fil établie L entre le module de communication 14 et le circuit de communication 24, comme déjà indiqué à propos des étapes E8 et E18.

## Revendications

1. Procédé d'évaluation de la distance (d) séparant un identifiant (20) équipé d'un premier module de communication sans fil (24) et un véhicule (10) équipé d'un second module de communication sans fil (14), comprenant les étapes suivantes :
- établissement d'une liaison sans fil (L) entre le premier module de communication sans fil (24) et le second module de communication sans fil (14) ;
- estimation (E8 ; E10 ; E18 ; E20) de ladite distance (d) en fonction d'un temps de propagation de signaux électromagnétiques impliqués dans la liaison sans fil établie (L) ;
**caractérisé en ce qu'**il comprend une étape d'activation de l'émission d'un signal dédié (S) émis lorsque ladite distance estimée (d) est inférieure à une valeur prédéterminée (do), et **en ce que** la distance (d) est évalué au moyen d'une mesure, par l'identifiant (20), de la puissance dudit signal émis (S).

2. Procédé d'évaluation selon la revendication 1, comprenant une étape de transmission (E24) de la distance évaluée, de l'identifiant (20) au véhicule (10), via la liaison sans fil établie (L).

3. Procédé d'évaluation selon l'une des revendications 1 à 2, comprenant une étape, préalable à l'étape d'établissement de la liaison sans fil (L), d'émission (E2) d'au moins une trame d'annonce (ADV) par le second module de communication sans fil (14).

4. Procédé d'évaluation selon l'une des revendications 1 à 3, dans lequel la liaison sans fil établie (L) a une portée supérieure à 10 m et dans lequel ledit signal (S) émis a une portée inférieure à 10 m.

5. Procédé d'évaluation selon l'une des revendications 1 à 4, dans lequel ledit signal émis (S) a une fréquence inférieure à 150 kHz.

6. Procédé d'évaluation selon l'une des revendications 1 à 5, dans lequel les signaux électromagnétiques impliqués dans la liaison sans fil établie (L) ont une fréquence supérieure à 1 Mhz.

7. Procédé d'évaluation selon l'une des revendications 1 à 6, dans lequel la liaison sans fil établie (L) est de type Bluetooth Low Energy.

8. Unité électronique (11) pour véhicule (10) comprenant :
- un module de lancement de l'établissement d'une liaison sans fil (L) entre un premier module de communication (24) équipant un identifiant (20) et un second module de communication (14) équipant le véhicule (10) ;
- un module de détermination ou de réception d'une distance estimée (d) en fonction d'un temps de propagation de signaux électromagnétiques impliqués dans la liaison sans fil établie (L) ;
- un module de commande de l'émission d'un signal dédié (S) au niveau du véhicule (10) ; et
- un module de réception d'une distance évaluée, au niveau de l'identifiant (20), par mesure de la puissance dudit signal émis (S)
**caractérisé en ce que** le module de commande, commande l'émission dudit signal dédié (S) émis que lorsque ladite distance estimée (d) est inférieure à une valeur prédéterminée (do).

9. Identifiant (20) comprenant :
- un module de lancement de l'établissement d'une liaison sans fil (L) entre un premier module de communication (24) équipant l'identifiant (20) et un second module de communication (14) équipant un véhicule (10) ;
- un module de détermination ou de réception d'une distance estimée (d) en fonction d'un temps de propagation de signaux électromagnétiques impliqués dans la liaison sans fil établie (L) ;
- un module de mesure (26) d'une puissance d'un signal dédié (S) émis au niveau du véhicule (10) ; et
- un module d'évaluation d'une distance en fonction de la puissance mesurée
**caractérisé en ce que** ledit signal dédié (S) est émis lorsque ladite distance estimée (d) est inférieure à une valeur prédéterminée (do).

## Patentansprüche

1. Verfahren zur Abschätzung des Abstands (d) zwischen einem Identifikator (20), der mit einem ersten Drahtloskommunikationsmodul (24) ausgestattet ist, und einem Fahrzeug (10), das mit einem zweiten Drahtloskommunikationsmodul (14) ausgestattet ist, wobei das Verfahren die folgenden Schritte umfasst:
- Herstellen einer drahtlosen Verbindung (L) zwischen dem ersten Drahtloskommunikationsmodul (24) und dem zweiten Drahtloskommunikationsmodul (14) ;
- Schätzen (E8; E10; E18; E20) des Abstands (d) in Abhängigkeit von einer Laufzeit von elektromagnetischen Signalen, die an der hergestellten drahtlosen Verbindung (L) beteiligt sind;
**dadurch gekennzeichnet, dass** es einen Schritt der Aktivierung des Sendens eines dedizierten Signals (S), das gesendet wird, wenn der geschätzte Abstand (d) unter einem vorbestimmten Wert (do) liegt, umfasst, und dadurch, dass der Abstand (d) mittels einer Messung der Leistung des gesendeten Signals (S) durch den Identifikator (20) abgeschätzt wird.

2. Verfahren zur Abschätzung nach Anspruch 1, umfassend einen Schritt der Übertragung (E24) des abgeschätzten Abstands von dem Identifikator (20) an das Fahrzeug (10) über die hergestellte drahtlose Verbindung (L).

3. Verfahren zur Abschätzung nach einem der Ansprüche 1 bis 2, umfassend einen Schritt des Sendens (E2) mindestens eines Ankündigungsrahmens (advertising frame, ADV) von dem zweiten Drahtloskommunikationsmodul (14) vor dem Schritt der Herstellung der drahtlosen Verbindung (L).

4. Verfahren zur Abschätzung nach einem der Ansprüche 1 bis 3, wobei die hergestellte drahtlose Verbindung (L) eine Reichweite von über 10 m aufweist und wobei das gesendete Signal (S) eine Reichweite von unter 10 m aufweist.

5. Verfahren zur Abschätzung nach einem der Ansprüche 1 bis 4, wobei das gesendete Signal (S) eine Frequenz unter 150 kHz aufweist.

6. Verfahren zur Abschätzung nach einem der Ansprüche 1 bis 5, wobei die elektromagnetischen Signale, die an der hergestellten drahtlosen Verbindung (L) beteiligt sind, eine Frequenz über 1 Mhz aufweisen.

7. Verfahren zur Abschätzung nach einem der Ansprüche 1 bis 6, wobei die hergestellte drahtlose Verbindung (L) eine Bluetooth-Low-Energy-Verbindung ist.

8. Elektronische Einheit (11) für ein Fahrzeug (10), umfassend:
- ein Modul zum Initiieren der Herstellung einer drahtlosen Verbindung (L) zwischen einem ersten Kommunikationsmodul (24), mit dem ein Identifikator (20) ausgestattet ist, und einem zweiten Kommunikationsmodul (14), mit dem das Fahrzeug (10) ausgestattet ist;
- ein Modul zum Bestimmen oder zum Empfangen eines in Abhängigkeit von einer Laufzeit von elektromagnetischen Signalen, die an der hergestellten drahtlosen Verbindung (L) beteiligt sind, geschätzten Abstands (d);
- ein Modul zum Steuern des Sendens eines dedizierten Signals (S) auf Fahrzeugebene (10); und
- ein Modul zum Empfangen eines abgeschätzten Abstands, auf Identifikatorebene (20), durch eine Messung der Leistung des gesendeten Signals (S)
**dadurch gekennzeichnet, dass** das Modul zum Steuern das Senden des dedizierten Signals (S) steuert, das nur dann gesendet wird, wenn der geschätzte Abstand (d) unter einem vorbestimmten Wert (do) liegt.

9. Identifikator (20), umfassend:
- ein Modul zum Initiieren der Herstellung einer drahtlosen Verbindung (L) zwischen einem ersten Kommunikationsmodul (24), mit dem der Identifikator (20) ausgestattet ist, und einem zweiten Kommunikationsmodul (14), mit dem ein Fahrzeug (10) ausgestattet ist;
- ein Modul zum Bestimmen oder zum Empfangen eines in Abhängigkeit von einer Laufzeit von elektromagnetischen Signalen, die an der hergestellten drahtlosen Verbindung (L) beteiligt sind, geschätzten Abstands (d);
- ein Modul zur Messung (26) einer Leistung eines auf Fahrzeugebene (10) gesendeten dedizierten Signals (S); und
- ein Modul zur Abschätzung eines Abstands in Abhängigkeit von der gemessenen Leistung,
**dadurch gekennzeichnet, dass** das dedizierte Signal (S) gesendet wird, wenn der geschätzte Abstand (d) unter einem vorbestimmten Wert (do) liegt.

## Claims

1. Method for evaluating the distance (d) separating an identifier (20) equipped with a first wireless communication module (24) and a vehicle (10) equipped with a second wireless communication module (14), comprising the following steps:
- establishing a wireless link (L) between the first wireless communication module (24) and the second wireless communication module (14);
- estimating (E8; E10; E18; E20) said distance (d) on the basis of a propagation time of electromagnetic signals involved in the wireless link (L) that is established;
**characterized in that** it comprises a step of activating the emission of a dedicated emitted signal (S) when said estimated distance (d) is less than a predetermined value (do), and **in that** the distance (d) is evaluated by way of a measurement, by the identifier (20), of the strength of said emitted signal (S).

2. Evaluation method according to Claim 1, comprising a step of transmitting (E24) the evaluated distance, from the identifier (20) to the vehicle (10), via the wireless link (L) that is established.

3. Evaluation method according to either of Claims 1 and 2, comprising a step, prior to the step of establishing the wireless link (L), of emitting (E2) at least one advertising frame (ADV) via the second wireless communication module (14).

4. Evaluation method according to one of Claims 1 to 3, wherein the wireless link (L) that is established has a range of greater than 10 m and wherein said emitted signal (S) has a range of less than 10 m.

5. Evaluation method according to one of Claims 1 to 4, wherein said emitted signal (S) has a frequency of less than 150 kHz.

6. Evaluation method according to one of Claims 1 to 5, wherein the electromagnetic signals involved in the wireless link (L) that is established have a frequency of greater than 1 MHz.

7. Evaluation method according to one of Claims 1 to 6, wherein the wireless link (L) that is established is of Bluetooth Low Energy type.

8. Electronic unit (11) for a vehicle (10), comprising:
- a module for launching the establishment of a wireless link (L) between a first communication module (24) with which an identifier (20) is equipped and a second communication module (14) with which the vehicle (10) is equipped;
- a module for determining or for receiving a distance (d) estimated on the basis of a propagation time of electromagnetic signals involved in the wireless link (L) that is established;
- a module for commanding the emission of a dedicated signal (S) at the vehicle (10); and
- a module for receiving a distance evaluated, at the identifier (20), by measuring the strength of said emitted signal (S),
**characterized in that** the command module commands the emission of said emitted dedicated signal (S) only when said estimated distance (d) is less than a predetermined value (d₀).

9. Identifier (20) comprising:
- a module for launching the establishment of a wireless link (L) between a first communication module (24) with which the identifier (20) is equipped and a second communication module (14) with which a vehicle (10) is equipped;
- a module for determining or for receiving a distance (d) estimated on the basis of a propagation time of electromagnetic signals involved in the wireless link (L) that is established;
- a module (26) for measuring a strength of a dedicated signal (S) emitted at the vehicle (10); and
- a module for evaluating a distance on the basis of the measured strength,
**characterized in that** said dedicated signal (S) is emitted when said estimated distance (d) is less than a predetermined value (d₀).
